# EUROPÄISCHE PATENTANMELDUNG

(11) **EP 1 933 026 A1**
(43) Veröffentlichungstag der Anmeldung: **18.06.2008**
(21) Anmeldenummer: 06025189.9
(22) Anmeldetag: 06.12.2006
(51) Int. Cl.: F03B 13/12, F04B 17/00

(54) **Wellen- und/oder Gezeitenpumpe**

(71) Anmelder: Schwender, René, 8405 Winterthur (CH)
(72) Erfinder: Schwender, René, 8405 Winterthur (CH)
(74) Vertreter: Römpler, Aldo

(57) **Zusammenfassung**

Der oder die Kolben (1, 2) eines oder mehrerer Zylinder (3, 4) sind in Abhängigkeit einer Wellen- und/oder Gezeitenbewegung einer Wasseroberfläche (8) durch einen Schwimmkörper (7) in eine Hubbewegung versetzbar. Es ist mindestens eine Ansaugöffnung (12, 13) und mindestens eine Auslassöffnung (21) vorhanden. Der Zylinder (3, 4) und der Kolben (1, 2) sind jeweils so ausgebildet, dass sowohl die Auf- als auch die Abwärtsbewegung der Wasseroberfläche (8) eine Pumpenwirkung erzeugt. Diese Wellen- und/oder Gezeitenpumpe weist einen hohen Wirkungsgrad auf. Sie eignet sich besonders für diejenigen Einsatzzwecke, wo ein grösseres Wasservolumen zu pumpen, beziehungsweise unter Druck zu setzen ist. Daher kann sie in Verbindung mit einer Generatorenstation zur Energiegewinnung eingesetzt werden.

## Beschreibung

Die vorliegende Erfindung betrifft eine Wellen- und/oder Gezeitenpumpe mit mindestens einem Zylinder und mindestens einem darin geführten Kolben, der in Abhängigkeit einer Wellen- und/oder Gezeitenbewegung einer Wasseroberfläche in eine Hubbewegung versetzbar ist.

Das Hochpumpen von Wasser, durch wellen betätigte Pumpen ist bekannt. Dabei werden gewöhnlich Kolbenpumpen verwendet. Diese Pumpen sind entweder am Ufer angeordnet oder ortsfest schwimmend verankert. Sie werden zumeist durch einen Hebelarm betrieben, der mit einer Boje verbunden ist. Die sich im Auf und Ab der Wellen bewegende Boje bewirkt die zum Pumpen erforderlichen Schwenkbewegungen des Hebelarmes. Derartige Pumpen sind einerseits störungsanfällig. Andererseits ist bei diesen Pumpen die Pumpenleistung relativ klein, so dass sich deren Einsatz kaum lohnt. Einen Sinn mögen sie dort haben, wo aus einem genügend bewegten Süsswassergewässer kleinere Mengen von Wasser zu Bewässerungszwecken zu befördern sind. Insbesondere für die Energiegewinnung aber, wo eine grössere Menge von strömendem oder unter Druck stehendem Wasser benötigt wird, sind die meisten Pumpen von vornherein kaum geeignet. Dieser Verwendungszweck bedingt, dass in relativ kurzer Zeit ein grösseres Wasservolumen gepumpt und unter Ausnutzung eines Druckes oder Gefälles einem Generator, beziehungsweise einer Turbine zugeführt werden kann.

Auf der Grundlage dieser Erkenntnisse setzt sich die Erfindung die Aufgabe, eine Wellen- und/oder Gezeitenpumpe zu schaffen, die eine einfache Konstruktion und einen hohen Wirkungsgrad aufweist, so dass sie sich auch für diejenigen Einsatzzwecke eignet, wo ein grösseres Wasservolumen hochzupumpen, beziehungsweise unter einen ausreichenden Druck setzbar ist.

Die erfindungsgemässe Wellen- und/oder Gezeitenpumpe entspricht den kennzeichnenden Merkmalen des Patentanspruchs 1. Weitere vorteilhafte Ausbildungen des Erfindungsgedankens sind aus den abhängigen Patentansprüchen ersichtlich.

Nachfolgend werden bevorzugte Ausführungsbeispiele der Erfindung anhand der schematischen Zeichnung näher beschrieben.
- Fig. 1: zeigt eine erste Ausführung der Wellen- und/oder Gezeitenpumpe;
- Fig. 2 - 4: verdeutlichen die Funktionsweise der Pumpe nach Fig. 1;
- Fig. 5 - 6: zeigen eine zweite Ausführung der Wellen- und/oder Gezeitenpumpe.

Bei der vorliegenden Wellen- und/oder Gezeitenpumpe handelt es sich um eine Kolbenpumpe, bei der mindestens ein Kolben 1 und 2 in mindestens einem Zylinder 3 und 4 in eine sich wiederholende Hubbewegung versetzbar ist. Zu diesem Zweck ist der Kolben 1 und 2 zum Beispiel über ein Gestänge 5 und 6 mit mindestens einem Schwimmkörper 7 verbunden, der die Auf- und Abwärtsbewegungen der Wasseroberfläche 8 an den Kolben 1 und 2 weitergibt, so dass dieser die Hubbewegung ausführt. Der Zylinder 3 und 4 ist ortsfest anzuordnen, beispielsweise mittels einer Verankerung 9 direkt auf dem Grund 10, namentlich dem Meeresgrund. Die dargestellte Verankerung 9 ist blockförmig und wirkt durch ein hohes Gewicht. Es sind aber auch andere Varianten denkbar. Wichtig ist, dass der Zylinder 3 und 4 seine Lage gegenüber dem Grund 10 nicht verändert. Der Schwimmkörper 7 ist vorzugsweise exzentrisch mit dem Gestänge 5 und 6 verbunden, wobei er diesem gegenüber drehbar gelagert ist, zum Beispiel mittels einer Drehscheibe 11. Dadurch kann sich der Schwimmkörper 7 immer nach der Welle oder Strömung ausrichten. Zum Ausgleich der Stampf- und Rollbewegungen des Schwimmkörpers 7 kann zudem ein entsprechendes Gelenk vorgesehen werden.

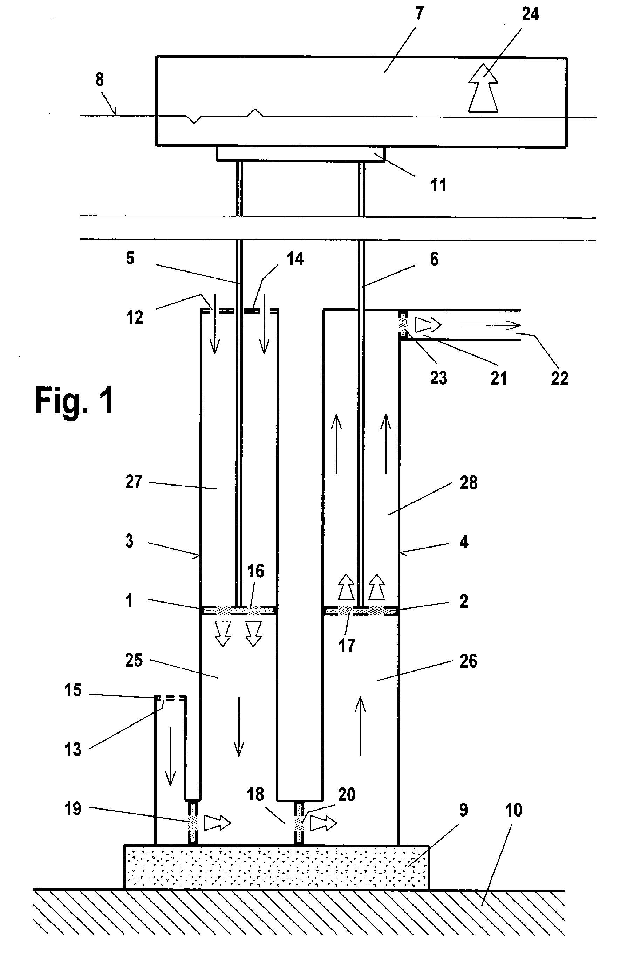

Beim ersten Ausführungsbeispiel nach den Fig. 1 - 4, wirken jeweils zwei Zylinder 3 und 4 paarweise zusammen. Es kann auch eine Mehrzahl von untereinander befestigten Zylinderpaaren vorgesehen werden, was nicht zuletzt auch die Stabilität und Verankerung der Konstruktion wesentlich begünstigen würde. Zum Beispiel können zwei Zylinderpaare in der Drauf sicht betrachtet ein Viereck bilden. Es sei ferner angemerkt, dass eine Reihe von Zylindern oder Zylinderpaaren in Serie oder Parallel geschaltet werden kann. Nicht völlig ausgeschlossen ist auch eine von der Senkrechten abweichende Anordnung der Zylinder 3 und 4. Die dargestellte Position ist aber mit Sicherheit am sinnvollsten.

Der erste Zylinder 3 weist hier zwei Ansaugöffnungen 12 und 13 auf, eine oben und eine unten, wobei die untere Ansaugöffnung 13 für den eigentlichen Pumpenbetrieb wichtiger ist. Der Pumpenbetrieb wird nachfolgend noch genau beschrieben. Die Ansaugöffnungen 12 und 13 sind vorteilhaft durch jeweils ein Sieb 14 und 15 geschützt. Im vorliegenden Beispiel sind die beiden Kolben 1 und 2 sind jeweils als Einwegsperrventil 16 und 17 ausgebildet oder mit mindestens einem Einwegsperrventil 16 und 17 versehen. Wesentlich ist aber insbesondere, dass der zweite Kolben 2 mit einem Einwegsperrventil 17 versehen ist. In diesem Ausführungsbeispiel ist ausserdem im Bereich der unteren Ansaugöffnung 13 und in der Verbindung 18 zwischen dem ersten Zylinder 3 und dem zweiten Zylinder 4 mindestens ein Einwegsperrventil 19 und 20 vorgesehen. Ebenso ist an der Auslassöffnung 21 vom zweiten Zylinder 4 zu einer Druckleitung 22 mindestens ein Einwegsperrventil 23 angeordnet. Die jeweilige Durchlassrichtung der Einwegsperrventile 16, 17, 19, 20 und 23 ist durch die breiten Pfeile angedeutet. Die Gegenrichtung ist jeweils gesperrt.

In Fig. 1 ist der Augenblick des sich bei steigender Wasseroberfläche 8 aufwärts bewegenden Schwimmkörpers 7 dargestellt. Dies ist schematisch durch dem Pfeil 24 angedeutet. Dabei geschieht Folgendes: Die beiden Kolben 1 und 2 bewegen sich in ihrem Zylinder 3 und 4 nach oben. Durch die untere Ansaugöffnung 13 wird Wasser in die untere, das heisst, unter dem Kolben 1 liegende Kammer 25 des ersten Zylinders 3 angesaugt. Diese Kammer 25 dient im ersten Zylinder 3 der eigentlichen Druckerzeugung. Ebenso füllt sich durch den Unterdruck die untere Kammer 26 des zweiten Zylinders 4. Die obere Kammer 27 des ersten Zylinders 3 kann sich durch die Ansaugöffnung 12 ungehindert nach aussen entleeren. Diese obere Kammer 27 dient somit hauptsächlich als Führung für den Kolben 1. Die Funktion der Führung könnte somit auch anders erfüllt werden, eventuell sogar ohne eine eigentliche Kammer 27. Gleichzeitig wird durch das Anheben des Kolbens 2 in der oberen Kammer 28 des zweiten Zylinders 4 ein Druck erzeugt, der durch die Auslassöffnung 21 in die Druckleitung 22 entweicht. Es wird also Wasser von der oberen Kammer 28 des zweiten Zylinders 4 unter Druck in die Druckleitung 22 befördert.

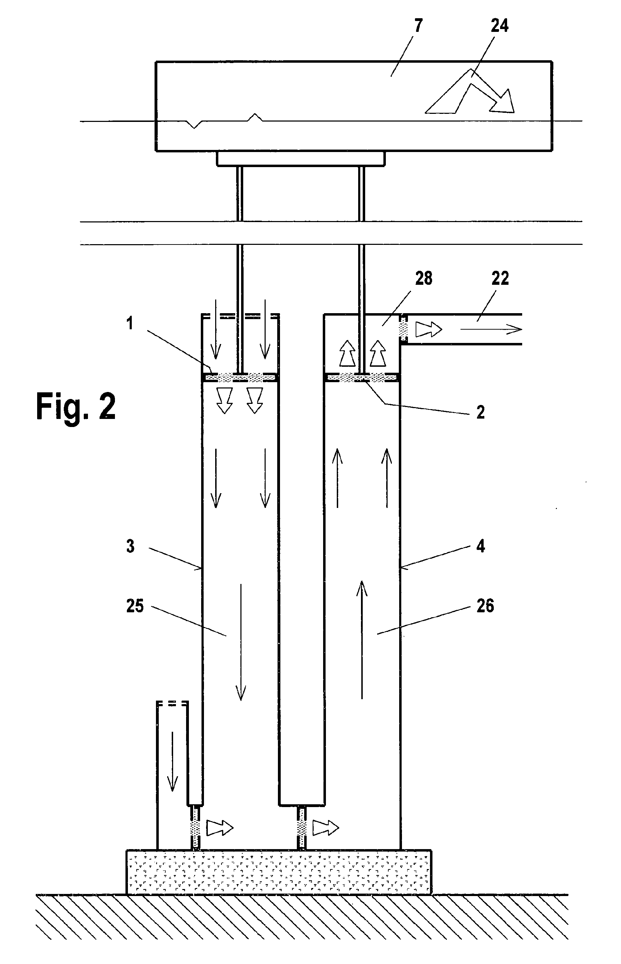

In der Position nach Fig. 2 sind der Schwimmkörper 7 und somit die Kolben 1 und 2 am oberen Wendepunkt angelangt, wie wiederum durch den Pfeil 24 angedeutet. Die obere Kammer 28 des zweiten Zylinders 4 hat sich stark verkleinert und das Wasser in die Druckleitung 22 gedrückt.

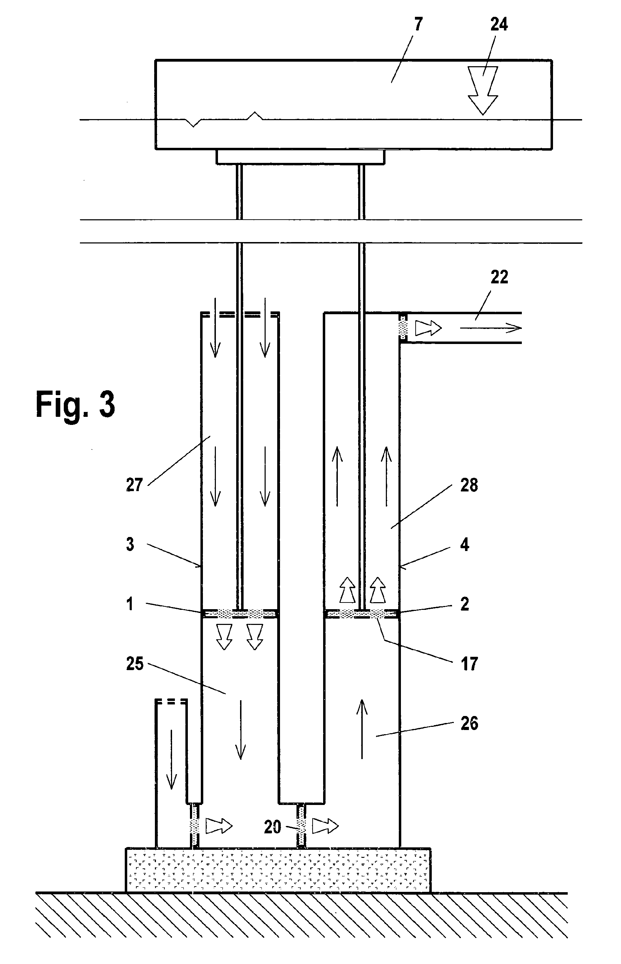

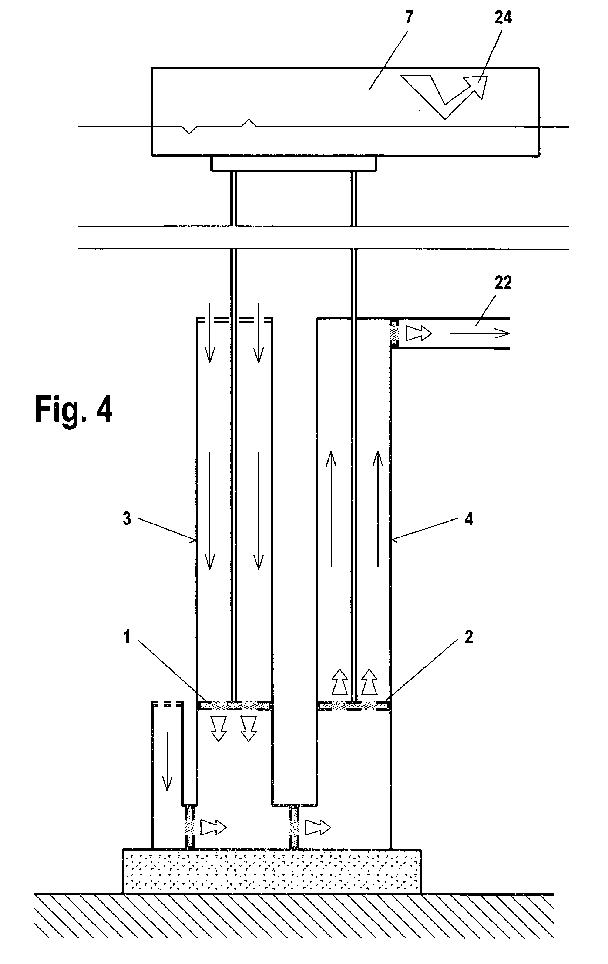

Die sich bei senkendem Schwimmkörper 7 ergebende Abwärtsbewegung nach Pfeil 24 geht aus Fig. 3 hervor. Das sich in der unteren Kammer 25 des ersten Zylinders 3 befindliche Wasser wird durch den sich absenkenden ersten Kolben 1 in den zweiten Zylinder 4 gedrückt. Die Einwegsperrventile 20 und 17 behindern dies nicht. Der sich ebenfalls absenkende zweite Kolben 2 spielt darum keine Rolle. Es entsteht somit ein sich verkleinernder Innenraum, der aus der unteren Kammer 25 des ersten Zylinders 3 und dem zweiten Zylinder 4 besteht. Das darin befindliche Wasser wird in die Druckleitung 22 gedrückt. Der untere Wendepunkt ist in Fig. 4 dargestellt.

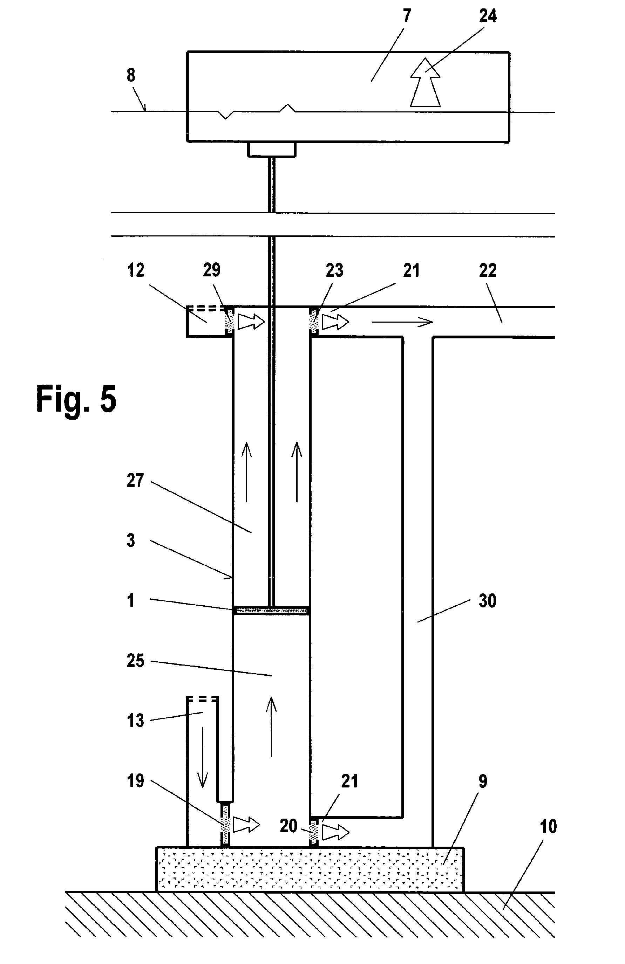

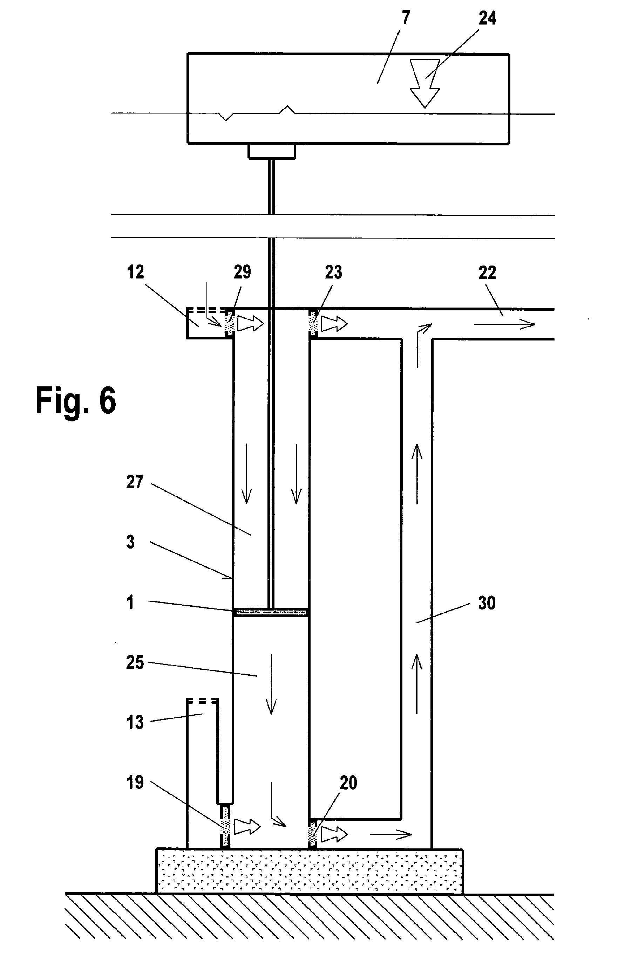

In der zweiten Ausführung der Wellen- und/oder Gezeitenpumpe nach den Fig. 5 und 6 ist nur ein Zylinder 3 mit einem Kolben 1 vorgesehen. Dieser Kolben 1 ist in beiden Hubrichtungen, also sowohl bei der Abwärtsbewegung als auch bei der Aufwärtsbewegung, wasserundurchlässig. An der oberen Ansaugöffnung 12 ist dagegen mindestens ein Einwegsperrventil 29 vorhanden, durch das Wasser zwar eindringen, nicht aber entweichen kann. Die unterhalb des Kolbens 1 liegende Kammer 25 ist über eine Verbindungsleitung 30 mit der Druckleitung 22 verbunden. Theoretisch, wenn auch weniger sinnvoll, wären auch zwei parallel verlaufende Druckleitungen möglich. Je eine für die obere oder die untere Kammer 27 und 25.

In der Aufwärtsbewegung des Schwimmkörpers 7 nach Pfeil 24 in Fig. 5 wird durch den steigenden Kolben 1 in der oberen Kammer 27 des Zylinders 3 Druck erzeugt. Das Wasser kann nur durch das Einwegsperrventil 23 in die Druckleitung 22 entweichen. Gleichzeitig wird durch die untere Ansaugöffnung 13 Wasser in die untere Kammer 25 gesaugt.

Umgekehrt wird in der Abwärtsbewegung des Schwimmkörpers 7 nach Fig. 6 in der unteren Kammer 25 Druck erzeugt. Das Wasser kann nur durch das Einwegsperrventil 22 in die Verbindungsleitung 30 zur Druckleitung 22 entweichen. Gleichzeitig wird durch die obere Ansaugöffnung 12 Wasser in die obere Kammer 27 gesaugt.

Beiden Ausführungen ist gemeinsam, dass sowohl in der Auf- als auch in der Abwärtsbewegung des Schwimmkörpers (7) der jeweilige Hub der Kolben 1 und 2 ein überaus starker Pumpendruck erzeugt, der sich in die Druckleitung 22 entlädt.

Der Schwimmkörper 7 kann auf verschiedene Weise konzipiert werden. Je nach Gewicht und Verdrängung ist es möglich, dass bei der Aufwärtsbewegung ein Vielfaches an Druck erzeugt werden kann, als bei der Abwärtsbewegung. Der Druck bei der Abwärtsbewegung wird durch das Gewicht des Schwimmkörpers 7 bestimmt. Bei der Aufwärtsbewegung hingegen durch die Verdrängung des Schwimmkörpers 7. Die Verwendung von mehr als einem Schwimmkörper 7 bleibt ebenfalls vorbehalten.

Die vorgeschlagene Konstruktion ermöglicht auch sehr grosse Zylinderdurchmesser. Beispielsweise würden bei einem Zylinderdurchmesser von 10 Metern bei einer Wellenhöhe von 1 Meter 78'800 Liter Wasser bewegt. Ist zum Beispiel ein Schwimmkörper von 50'000 Kg Gewicht mit einem Volumen von 150'000 dm³ vorgesehen, erzeugt die Abwärtsbewegung einen Druck von 50 Tonnen und die Aufwärtsbewegung einen solchen von 100 Tonnen. Mit der Grösse des Zylinders und dem Volumen und Gewicht des Schwimmkörpers bestimmt man den Druck und das Durchlaufvolumen des Wassers, wobei letzteres noch von der Wellenhöhe und Wellenfrequenz mitbestimmt wird. Je nach benötigter Wassermenge, beziehungsweise Kraftumsetzung der Turbinen, kann die Wellen- und/oder Gezeitenpumpe in fast jeder Grösse gebaut werden.

Diese Wellen- und/oder Gezeitenpumpe kann praktisch 24 Stunden am Tag die nötige Wasserkraft liefern, um ein Elektrokraftwerk betreiben zu können. Das Wasser kann in einen Druckbehälter mit Sicherheitsventil oder zu einem höher gelegenen Auffangbecken mit Überlauf geleitet werden. Nach dem Passieren des Generators kann es zurück ins Meer fliessen. Die Wellen- und/oder Gezeitenpumpe arbeitet mit der erneuerbaren und kostenlosen Energie des sich hebenden und senkenden Wassers. Sie bietet eine für die Umwelt in jeder Hinsicht optimale Lösung. Auf dem Wasser ist nur der Schwimmkörper 7 sichtbar. Dieser kann zudem so gestaltet werden, dass er nicht stört, sei es als für verschiedene Zwecke nutzbare Plattform oder auch als Kunstwerk. Der Schwimmkörper 7 kann auch wie ein vor Anker liegendes Schiff aussehen. Die Druckleitung 22 und die Generatorenstation können so gestaltet und angeordnet werden, dass sie unsichtbar bleiben. Selbst der Druckbehälter oder das Auffangbecken können kaschiert werden.

Da kein sich gefährlich auf und ab bewegender Hebel vorhanden ist, wird auch das Risiko für Mensch und Tier, zum Beispiel für Badende, auf ein absolutes Minimum reduziert. Und selbst bei einem Defekt der Wellen- und/oder Gezeitenpumpe können keine schädlichen Substanzen ins Meer gelangen.

Es liegt im Rahmen der Erfindung, die Wellen- und/oder Gezeitenpumpe auch anders als schematisch gezeichnet und beschrieben auszubilden. Die Proportionen sowie die genaue Anordnung, Anzahl und Gestaltung der einzelnen Bauteile können auch geändert werden. Beispielsweise kann das den Kolben 1 oder 2 mit dem Schwimmer verbindende Gestänge 5 und 6 auch gelenkig und/oder bis zu einem gewissen Grad biegsam oder gefedert sein.

## Patentansprüche

1. Wellen- und/oder Gezeitenpumpe mit mindestens einem Zylinder (3, 4) und mindestens einem darin geführten Kolben (1, 2), der in Abhängigkeit einer Wellen- und/oder Gezeitenbewegung einer Wasseroberfläche (8) in eine Hubbewegung versetzbar ist, **dadurch gekennzeichnet, dass** der Zylinder (3, 4) und/oder der Kolben (1, 2) so ausgebildet ist/sind, dass sowohl die Auf- als auch die Abwärtsbewegung der Wasseroberfläche (8) eine Pumpenwirkung erzeugt.

2. Wellen- und/oder Gezeitenpumpe nach Anspruch 1, **dadurch gekennzeichnet, dass** der Kolben (1, 2) mit mindestens einem Schwimmkörper (7) verbunden ist.

3. Wellen- und/oder Gezeitenpumpe nach Anspruch 1 oder 2, **dadurch gekennzeichnet, dass** der Zylinder (3, 4) eine Verankerung (9) aufweist, mit dem Zweck, ihn auf oder gegenüber einem Grund (10) ortsfest halten zu können.

4. Wellen- und/oder Gezeitenpumpe nach Anspruch 2 oder 3, **dadurch gekennzeichnet, dass** der Schwimmkörper (7) exzentrisch und/oder gelenkig mit dem Kolben (1, 2) verbunden ist, so dass er sich nach der Welle oder Strömung ausrichten und/oder Stampf- und Rollbewegungen ausführen kann.

5. Wellen- und/oder Gezeitenpumpe nach einem der Ansprüche 1 - 4, **dadurch gekennzeichnet, dass** der Zylinder (3) in seinem unteren Bereich mindestens eine Ansaugöffnung (13) aufweist.

6. Wellen- und/oder Gezeitenpumpe nach einem der Ansprüche 1 - 5, **dadurch gekennzeichnet, dass** der Zylinder (3) in seinem oberen Bereich mindestens eine Öffnung oder Ansaugöffnung (12) aufweist.

7. Wellen- und/oder Gezeitenpumpe nach Anspruch 5 oder 6, **dadurch gekennzeichnet, dass** mindestens eine Ansaugöffnung (12, 13) oder eine diese mit einer Kammer (25, 27) des Zylinders (3) verbindende Zuleitung ein Einwegsperrventil (19, 29) aufweist.

8. Wellen- und/oder Gezeitenpumpe nach Anspruch 5 oder 6, **dadurch gekennzeichnet, dass** mindestens eine Auslassöffnung (21), durch die das Wasser den Zylinder (3, 4) verlassen kann, ein Einwegsperrventil (20, 23) aufweist.

9. Wellen- und/oder Gezeitenpumpe nach einem der Ansprüche 1 - 8, **dadurch gekennzeichnet, dass** mindestens ein Kolben (1, 2) ein Einwegsperrventil (16, 17) aufweist oder als Einwegsperrventil (16, 17) ausgebildet ist.

10. Wellen- und/oder Gezeitenpumpe nach einem der Ansprüche 1 - 8, **dadurch gekennzeichnet, dass** mindestens ein Zylinder (3) durch mindestens einen Kolben (1) in mindestens eine erste und eine zweite Kammer (25, 27) geteilt ist, wobei jede dieser Kammern (25, 27) mindestens eine Ansaugöffnung (12, 13) und mindestens eine Auslassöffnung (21) aufweist (Fig. 5).

11. Wellen- und/oder Gezeitenpumpe nach einem der Ansprüche 1 - 8, **dadurch gekennzeichnet, dass** zwei benachbarte Zylinder (3, 4) über mindestens eine Verbindung (18) miteinander verbunden sind, wobei jeder dieser zwei Zylinder (3, 4) über mindestens einen Kolben (1, 2) verfügt und wobei mindestens einer dieser beiden Kolben (2) mit einem Einwegsperrventil (17) versehen ist oder als solcher ausgebildet ist.

12. Wellen- und/oder Gezeitenpumpe nach Anspruch 11, **dadurch gekennzeichnet, dass** mindestens der zweite Zylinder (4) durch seinen Kolben (2) in mindestens eine erste und eine zweite Kammer (26, 28) geteilt ist, wobei eine der Druckerzeugung dienende Kammer (25) des ersten Zylinders (3) mindestens eine Verbindung (18) zu einer Kammer (26) des zweiten Zylinders (4) aufweist und wobei diejenige Kammer (25) des ersten Zylinders (3), die die Verbindung (18) zum zweiten Zylinder (4) aufweist, auch mit mindestens einer Ansaugöffnung (13) versehen ist, während diejenige Kammer (28) des zweiten Zylinders (4), die nicht in Verbindung mit dem ersten Zylinder (3) steht, mit mindestens einer Auslassöffnung (21) versehen ist, wobei das/die Einwegsperrventile (17) des Kolbens (2) des zweiten Zylinders (4) so ausgelegt ist/sind, dass der Durchlass in Richtung zur Kammer (28) mit der Auslassöffnung (21) gewährleistet ist (Fig. 1).

13. Wellen- und/oder Gezeitenpumpe nach Anspruch 12, **dadurch gekennzeichnet, dass** der erste Zylinder (3) durch seinen Kolben (1) in mindestens eine erste und eine zweite Kammer (27, 25) geteilt ist, wobei das/die Einwegsperrventile (16) des Kolbens (1) so ausgelegt ist/sind, dass der Durchlass in Richtung zur Kammer (25) mit der Verbindung (18) zum zweiten Zylinder (4) gewährleistet ist (Fig. 1).

14. Wellen- und/oder Gezeitenpumpe nach einem der Ansprüche 11 - 13, **dadurch gekennzeichnet, dass** mindestens zwei Paare von jeweils zwei durch eine Verbindung (18) miteinander verbundenen Zylindern (3, 4) derart zueinander angeordnet sind, dass die vier Zylinder (3, 4) in der Draufsicht betrachtet ein Viereck bilden und untereinander befestigt sind.

15. Wellen- und/oder Gezeitenpumpe nach einem der Ansprüche 1 - 14, **dadurch gekennzeichnet, dass** mindestens eine Auslassöffnung (21) mit einer Druckleitung (22) verbunden ist, die ihrerseits zu einem Auffangbecken und/oder einem Druckbehälter führt, wobei weiter mindestens eine Generatorenstation zur Erzeugung elektrischen Stromes vorhanden ist.
